# EUROPÄISCHE PATENTSCHRIFT

(11) **EP 2 778 480 B1**
(45) Veröffentlichungstag und Bekanntmachung des Hinweises auf die Patenterteilung: **10.04.2019**
(21) Anmeldenummer: 14153626.8
(22) Anmeldetag: 03.02.2014
(51) Int. Cl.: F16H 59/02, F16H 61/36

(54) **FAHRZEUG MIT EINER SCHALTHEBELANORDNUNG**
VEHICLE WITH A SHIFT LEVER ASSEMBLY
VÉHICULE DOTÉ D'UN SYSTÈME DE LEVIER DE CHANGEMENT DE VITESSE

(30) Priorität: 12.03.2013 DE 102013204175
(43) Veröffentlichungstag der Anmeldung: 17.09.2014
(73) Patentinhaber: Bayerische Motoren Werke Aktiengesellschaft, 80809 München (DE)
(72) Erfinder: Fabian, Karsten, 85764 Oberschleissheim (DE); Ronner, Gerhard, 84104 Hebrontshausen (DE)

(56) Entgegenhaltungen:
- EP-A1- 1 405 751
- DE-A1- 19 919 564
- DE-A1-102009 011 476
- GB-A- 2 230 497
- JP-A- H01 122 732
- JP-A- S58 161 621

## Beschreibung

Die vorliegende Erfindung betrifft ein Fahrzeug mit einer Schalthebelanordnung gemäß dem Oberbegriff des Patentanspruches 1.

Ein derartiges Fahrzeug ist aus der EP 1 405 751 A1 bekannt. Zum technischen Hintergrund der Erfindung zählen die JPS 58161621 A, JPH 01122732 A, DE 10 2009 011 476 A1, DE 199 19 564 A1 sowie die GB 2230497 A.

Bei Fahrzeugen mit quer eingebautem Verbrennungsmotor und Handschaltgetriebe ist der im Fahrgastraum befindliche Getriebeschalthebel üblicherweise über zwei Seilzüge mit dem Handschaltgetriebe bzw. mit einer Schaltwelle des Handschaltgetriebes gekoppelt. Über einen der beiden Seilzüge werden Wählbewegungen zum Anwählen einzelner Schaltgassen des Getriebes übertragen. Über den anderen Seilzug werden Schaltbewegungen innerhalb einzelner Schaltgassen übertragen, d. h. Gänge ein- bzw. ausgelegt.

Im Betrieb des Verbrennungsmotors treten an der Motor- Getriebeeinheit Vibrationen auf, insbesondere im Leerlauf bzw. bei niedrigen Drehzahlen. Diese Vibrationen können sich bei herkömmlichen Fahrzeugen über den Seilzug, über den Wählkräfte bzw. Wählmomente auf die Schaltwelle übertragen werden, bis zum Schalthebel fortpflanzen.

Zur Beseitigung dieses Problems wurden bereits verschiedenste Abhilfemaßnahmen in Betracht gezogen, z. B.
- eine Entkoppelung der "Schaltmasse" am Getriebe von der Wählbewegung am Getriebe, was mit einer aufwändigen Schaltdomkonstruktion einherginge,
- ein Wählseilende mit vergleichsweise großer Dämpfung und progressiver Kennlinie, was jedoch unmittelbar den Verlauf der Wählkraft (über den Wählweg bzw. Schwenkwinkel) beeinflussen würde,
- ein Tilger an der "Schaltmasse" am Getriebe, was konstruktiv aufwändig wäre bzw.
- ein Tilger unmittelbar am Schalthebel, was entsprechenden Bauraum im Bereich der Mittelkonsole voraussetzt und das gefühlte Gewicht des Schalthebels erhöht.

Aufgabe der Erfindung ist es, ein Fahrzeug, insbesondere ein Fahrzeug mit quer eingebautem Verbrennungsmotor, und einer Schalthebelanordnung zu schaffen, bei dem eine Fortpflanzung von Motorschwingungen zum Schalthebel weitestgehend unterbunden wird.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist ein Fahrzeug mit einer Schalthebelanordnung, die einen Schalt(hebel)bock aufweist, an dem ein Schalthebel schwenkbar (z.B. über ein Kugelgelenk) in einer Querrichtung des Fahrzeugs (Wählen einzelner Schaltgassen) und schwenkbar in einer Längsrichtung des Fahrzeugs (Schalten einzelner Gänge) gelagert ist.

Die Schalthebelanordnung weist ferner einen sogenannten "Umsetzer" auf, der schwenkbar um eine in der Querrichtung verlaufende Schwenkachse an dem Schaltbock gelagert ist. Der Schalthebel ist über eine Koppeleinrichtung mit dem Umsetzer gekoppelt, derart, dass eine Schwenkbewegung des Schalthebels in der Querrichtung in eine Schwenkbewegung des Umsetzers um die Schwenkachse umgesetzt wird. Wird der Schalthebel, zum Anwählen einzelner Schaltgassen in Querrichtung des Fahrzeugs verschwenkt, so wird diese Schwenkbewegung in eine Schwenkbewegung des Umsetzers um die in Fahrzeugquerrichtung verlaufende Schwenkachse umgesetzt.

Ferner ist ein erster Seilzugmechanismus (Schaltseilzug) vorgesehen, der ein erstes Seil aufweist, welches mit dem Schalthebel gekoppelt ist, derart, dass ein Verschwenken des Schalthebels in der Längsrichtung des Fahrzeugs in eine Verschiebung des schaltbockseitigen Endes des ersten Seils (in Fahrzeuglängsrichtung) umgesetzt wird.

Darüber hinaus ist ein zweiter Seilzug vorgesehen, der ein zweites Seil aufweist, welches mit dem Umsetzer verbunden ist, derart, dass ein Verschwenken des Umsetzers in eine Verschiebebewegung des schaltbockseitigen Endes des zweiten Seils umgesetzt wird. Bei einem Verschwenken des Schalthebels in Fahrzeugquerrichtung wird somit das schaltbockseitige Ende des zweiten Seils verschoben.

Der Kern der Erfindung besteht in einer Tilgermasse, die über eine Federeinrichtung elastisch an dem Umsetzer abgestützt ist, wobei die Tilgermasse schwenkbar angeordnet ist.

Eventuelle Vibrationen bzw. Pulsationen, die von der Motor-/Getriebeeinheit des Fahrzeugs über das zweite Seil übertragen werden, werden durch die Tilgermasse weitestgehend ausgelöscht. Somit wird verhindert, dass Pulsationen bzw. Vibrationen der Motor-/Getriebeeinheit sich über den zweiten Seilzugmechanismus bis zum Schalthebel fortpflanzen. Eine derartige mit dem Umsetzer gekoppelte Tilgermasse beansprucht vergleichsweise wenig Bauraum und ist konstruktiv einfach und kostengünstig umzusetzen.

Nach einer Weiterbildung der Erfindung ist die Tilgermasse schwenkbar um die Schwenkachse des Umsetzers angeordnet. Tilgermasse und Umsetzer können also ein- und dieselbe Schwenkachse aufweisen. Ferner kann vorgesehen sein, dass die Tilgermasse im Wesentlichen am Ende eines Tilgermassenarms (der ein relativ zur Tilgermasse geringes Gewicht aufweist) konzentriert ist. Die Tilgermasse kann also im Wesentlichen an einem Tilgermassenarm angeordnet sein, wobei der Tilgermassenarm schwenkbar um die Schwenkachse ist.

Nach einer Weiterbildung der Erfindung weist das Fahrzeug einen Verbrennungsmotor auf, an dem ein Getriebe angeflanscht ist. Das Getriebe wiederum weist eine Schaltwelle auf,
a.) die verschiebbar ist, wobei durch das Verschieben der Schaltwelle einzelne Schaltgassen anwählbar sind und
b.) die über einen außerhalb des Getriebes angeordneten Schaltmechanismus (Schaltdom) drehbar ist, wobei durch Drehen der Schaltwelle einzelne Gänge der momentan angewählten Schaltgasse schaltbar sind.

Das erste Seil bzw. der erste Seilzugmechanismus ist so mit dem Schaltmechanismus gekoppelt, dass durch Betätigen des ersten Seils die Schaltwelle drehbar ist. Dementsprechend ist das zweite Seil so mit dem Schaltmechanismus gekoppelt, das durch Betätigen des zweiten Seils die Schaltwelle verschiebbar ist.

Wie bereits erwähnt, ist die Erfindung insbesondere für Fahrzeuge mit Verbrennungsmotor geeignet, bei denen der Verbrennungsmotor quer in das Fahrzeug eingebaut ist, d. h. bei denen sich die Kurbelwelle des Verbrennungsmotors in einer Querrichtung des Fahrzeugs erstreckt.

Im Folgenden wird die Erfindung im Zusammenhang mit der Zeichnung näher erläutert. Es zeigen:
- Figur 1: eine perspektivische Darstellung einer Schalthebelanordnung gemäß der Erfindung; und
- Figur 2: die Schalthebelanordnung der Figur 1 in Seitenansicht.

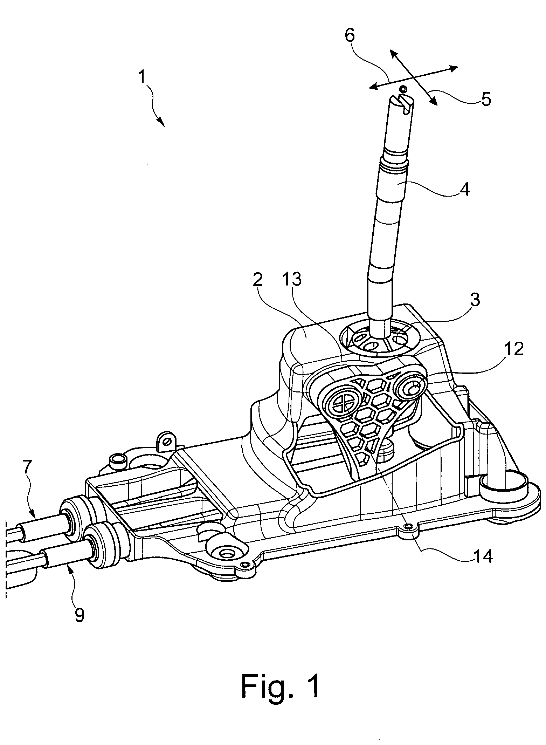

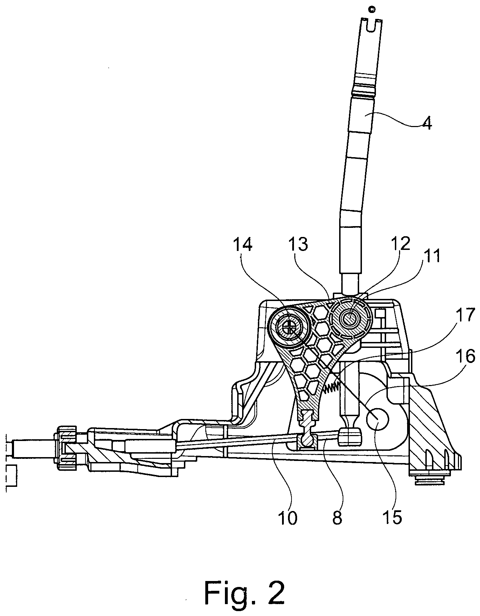

Figur 1 zeigt eine Schalthebelanordnung 1 mit einem sogenannten Schalthebelbock 2 (oder auch "Schaltbox" genannt), in dem über ein Kugelgelenk 3 ein Schalthebel 4 gelagert ist. Über das Kugelgelenk 3 kann der Schalthebel 4 in einer Querrichtung 5 des Fahrzeugs und senkrecht dazu in einer Längsrichtung 6 des Fahrzeugs verschwenkt werden. Durch Verschwenken des Schalthebels 5 in einer Querrichtung des Fahrzeugs können einzelne Schaltgassen gewählt werden. Durch Verschwenken des Schalthebels in Längsrichtung 6 des Fahrzeugs können innerhalb einzelner Schaltgassen liegende Gänge ein- bzw. ausgelegt werden. Zum Ein- bzw. Auslegen einzelner Gänge ist der Schalthebel 4 über einen ersten Seilzugmechanismus 7 bzw. ein erstes Seil 8 (vgl. Figur 2) des ersten Seilzugmechanismus 7 mit einer hier nicht näher dargestellten Schaltwelle eines Getriebes verbunden. Durch Verschwenken des Schalthebels 4 in Fahrzeuglängsrichtung 6 kann das Seil 8 entgegen der Fahrtrichtung nach hinten gezogen oder in Fahrtrichtung nach vorne gedrückt werden, wobei einzelne Gänge einer Schaltgasse ein- bzw. ausgelegt werden können. Zum Übertragen von Wählbewegungen, d. h. zum Anwählen einzelner Schaltgassen ist ein zweiter Seilzugmechanismus 9, der ein zweites Seil 10 aufweist, vorgesehen.

Der Schalthebel 4 ist über einen sich in einer Querrichtung des Fahrzeugs erstreckenden Finger 11 und ein Kugelgelenk 12 mit einem Umsetzer 13 gekoppelt.

Bei dem in den Figuren 1 und 2 gezeigten Ausführungsbeispiel ist der Umsetzer 13 als plattenartiges, dreieckähnliches Element ausgebildet, das um eine sich in einer Fahrzeugquerrichtung erstreckende Schwenkachse 14 schwenkbar am Schalthebelbock 2 gelagert ist.

Ein Verschwenken des Schalthebels 4 in Fahrtrichtung betrachtet nach links, bewirkt ein Verschwenken des Umsetzers 13 im Uhrzeigersinn und somit ein "nach vorne Verschieben" des zweiten Seils 10. Ein Verschwenken des Schalthebels 4, in Fahrtrichtung betrachtet, nach rechts, bewirkt ein Verschwenken des Umsetzers 13 entgegen dem Uhrzeigersinn und somit ein nach hinten Ziehen des Wählseils 10, wobei die Betätigungsrichtung des Seils 10 (Wählseil) auch umgekehrt als bei dem gezeigten Ausführungsbeispiel sein kann.

Wie aus Figur 2 ersichtlich ist, ist ferner eine Tilgermasse 15 vorgesehen, die an einem Tilgermassenarm 16 angeordnet ist, welcher um die Schwenkachse 14 schwenkbar ist. Die Tilgermasse 15 bzw. der Tilgermassenarm 16 ist über eine Federeinrichtung 17 am Umsetzer 13 abgestützt.

Die Tilgermasse 15 muss aber nicht notwendigerweise über einen Tilgermassenarm konzentrisch bezüglich des Umsetzers 13 gelagert sein. Denkbar wäre auch, dass eine Tilgermasse über eine oder mehrere Federn ausschließlich am "Umsetzer 13" gelagert ist.

Wesentlich ist, dass mittels einer derartigen Tilgermasse sehr wirksam verhindert werden kann, dass sich eventuelle Vibrationen bzw. Pulsationen des Verbrennungsmotors bzw. Getriebes über das Wählseil 10 bis zum Schalthebel 4 fortpflanzen.

## Patentansprüche

1. Fahrzeug mit einer Schalthebelanordnung (1), die
- einen Schalthebelbock (2) aufweist, an dem ein Schalthebel (4)
• schwenkbar in einer Querrichtung (5) des Fahrzeugs und
• schwenkbar in einer Längsrichtung (6) des Fahrzeugs gelagert ist, wobei
- ein Umsetzer (13) vorgesehen ist, der schwenkbar um eine in der Querrichtung (5) verlaufende Schwenkachse (14) an dem Schalthebelbock (2) gelagert ist und der über eine Koppeleinrichtung (11, 12) mit dem Schalthebel (4) gekoppelt ist, derart, dass eine Schwenkbewegung des Schalthebels (4) in der Querrichtung (5) in eine Schwenkbewegung des Umsetzers (13) um die Schwenkachse (14) umgesetzt wird,
- ein erster Seilzugmechanismus (7) vorgesehen ist, der ein erstes Seil (8) aufweist, welches mit dem Schalthebel (4) gekoppelt ist, derart, dass ein Verschwenken des Schalthebels (4) in der Längsrichtung (6) des Fahrzeugs in eine Verschiebung des erstens Seils (8) umgesetzt wird,
und
- ein zweiter Seilzugmechanismus (9) vorgesehen ist, der ein zweites Seil (10) aufweist, welches mit dem Umsetzer (13) verbunden ist, derart, dass ein Verschwenken des Umsetzers (13) in eine Verschiebung des zweiten Seils (10) umgesetzt wird,
**dadurch gekennzeichnet, dass**
• eine Tilgermasse (15) vorgesehen ist, die über eine Federeinrichtung (17) an dem Umsetzer (13) abgestützt ist,wobei
• die Tilgermasse (15) schwenkbar angeordnet ist.

2. Fahrzeug nach Anspruch 1, **dadurch gekennzeichnet, dass** die Tilgermasse schwenkbar um die Schwenkachse (14) angeordnet ist.

3. Fahrzeug nach einem der der Ansprüche 1 oder 2, **dadurch gekennzeichnet, dass** die Tilgermasse (15) einen Tilgermassenarm (16) angeordnet ist, der schwenkbar um die Schwenkachse (14) ist.

4. Fahrzeug nach einem der der Ansprüche 1 bis 3, **dadurch gekennzeichnet, dass** das Fahrzeug einen Verbrennungsmotor aufweist, an den ein Getriebe angeflanscht ist, wobei das Getriebe eine Schaltwelle aufweist, die über einen außerhalb des Getriebes angeordneten Schaltmechanismus
- verschiebbar ist, wobei durch Verschieben der Schaltwelle einzelne Schaltgassen anwählbar sind und die
- drehbar ist, wobei durch Drehen der Schaltwelle einzelne Gänge einer momentan angewählten Schaltgassen schaltbar sind.

5. Fahrzeug nach Anspruch 4, **dadurch gekennzeichnet, dass** das erste (8) Seil so mit dem Schaltmechanismus gekoppelt ist, dass durch Betätigen des ersten Seils (8) die Schaltwelle drehbar ist.

6. Fahrzeug nach Anspruch 4 oder 5, **dadurch gekennzeichnet, dass** das zweite Seil (8) so mit dem Schaltmechanismus gekoppelt ist, dass durch Betätigen des zweiten Seils die Schaltwelle verschiebbar ist.

7. Fahrzeug nach einem der der Ansprüche 4 bis 6, **dadurch gekennzeichnet, dass** Verbrennungsmotor so in das Fahrzeug eingebaut ist, dass sich eine Kurbelwelle des Verbrennungsmotors in einer Querrichtung (5) des Fahrzeugs erstreckt.

8. Fahrzeug nach einem der der Ansprüche 1 bis 7, **dadurch gekennzeichnet, dass** die beiden Seile (8, 10) parallel in Bezug zueinander an den Schalthebelbock (2) herangeführt sind.

## Claims

1. A vehicle with a gear lever arrangement (1) which
- has a gear lever support (2) on which a gear lever (4)
• is mounted to be pivotable in a transverse direction (5) of the vehicle and
• to be pivotable in a longitudinal direction (6) of the vehicle, wherein
- a converter (13) is provided which is mounted on the gear lever support (2) to be pivotable about a pivot axis (14) running in the transverse direction (5) and which is coupled with the gear lever (4) by means of a coupling means (11, 12), in such a way that a pivoting movement of the gear lever (4) in the transverse direction (5) is converted into a pivoting movement of the converter (13) about the pivot axis (14),
- a first cable mechanism (7) is provided which has a first cable (8) which is coupled with the gear lever (4) in such a way that pivoting of the gear lever (4) in the longitudinal direction (6) of the vehicle is converted into displacement of the first cable (8), and
- a second cable mechanism (9) is provided which has a second cable (10) which is connected to the converter (13) in such a way that pivoting of the converter (13) is converted into displacement of the second cable (10),
**characterised in that**
• a damper mass (15) is provided which is supported on the converter (13) via a spring means (17), wherein
• the damper mass (15) is arranged to be pivotable.

2. A vehicle according to Claim 1, **characterised in that** the damper mass is arranged to be pivotable about the pivot axis (14).

3. A vehicle according to one of Claims 1 or 2, **characterised in that** the damper mass (15) is arranged a damper mass arm [sic] (16) which is pivotable about the pivot axis (14).

4. A vehicle according to one of Claims 1 to 3, **characterised in that** the vehicle has an internal combustion engine to which a gearbox is flange-connected, the gearbox having a selector shaft which, via a switching mechanism arranged outside the gearbox,
- is displaceable, with individual shift gates being able to be selected by displacing the selector shaft, and which
- is rotatable, with individual gears of a currently selected shift gate being able to be selected by turning the selector shaft.

5. A vehicle according to Claim 4, **characterised in that** the first cable (8) is coupled with the switching mechanism such that the selector shaft can be rotated by actuating the first cable (8).

6. A vehicle according to Claim 4 or Claim 5, **characterised in that** the second cable (8) is coupled with the switching mechanism such that the selector shaft can be displaced by actuating the second cable.

7. A vehicle according to one of Claims 4 to 6, **characterised in that** the internal combustion engine is installed in the vehicle such that a crankshaft of the internal combustion engine extends in a transverse direction (5) of the vehicle.

8. A vehicle according to one of Claims 1 to 7, **characterised in that** the two cables (8, 10) are brought up to the gear lever support (2) parallel in relation to each other.

## Revendications

1. Véhicule comprenant un dispositif de levier de changement de vitesse (1), qui
- compte une embase de levier de changement de vitesse (2) sur laquelle un levier de changement de vitesse (4) est monté,
• pivotant dans la direction transversale (5) du véhicule, et /ou
• pivotant pivotement dans la direction longitudinale (6) du véhicule, dans lequel
- il est prévu un convertisseur (13) qui est monté pivotant sur l'embase de levier de changement de vitesse (2) autour d'un axe de pivotement (14) s'étendant dans la direction transversale (5), et qui est couplé par un dispositif de couplage (11, 12) avec le levier de changement de vitesse (4) de sorte qu'un pivotement du levier de changement de vitesse (4) dans la direction transversale (5) soit transformé en pivotement du convertisseur (13) autour de l'axe de pivotement (14),
- il est prévu un premier mécanisme de câble de traction (7) qui comporte un premier câble (8) qui est couplé au levier de changement de vitesse (4) de sorte qu'un pivotement du levier de changement de vitesse (4) dans la direction longitudinale (6) du véhicule soit transformé en un coulissement du premier câble (8), et
- il est prévu un second mécanisme de câble de traction (9) qui comporte un second câble (10) qui est relié de ce convertisseur (13) de sorte qu'un pivotement de ce convertisseur (13) soit transformé en un coulissement du second câble (10),
**caractérisé en ce qu'**
• il est prévu une masselotte (15) qui s'appuie sur le convertisseur (13) par l'intermédiaire d'un dispositif de ressort (17), et
• la masselotte (15) est montée pivotante.

2. Véhicule conforme à la revendication 1,
**caractérisé en ce que**
la masselotte est montée pivotante autour de l'axe de pivotement (14).

3. Véhicule conforme à l'une des revendications 1 et 2,
**caractérisé en ce que**
la masselotte (15) est montée sur un bras de masselotte (16) qui est pivotant autour de l'axe de pivotement (14).

4. Véhicule conforme à l'une des revendications 1 à 3,
**caractérisé en ce qu'**
il comporte un moteur à combustion interne sur lequel est bridée une boîte de vitesses, cette boîte de vitesses comprenant un arbre de changement de vitesse qui est monté par l'intermédiaire d'un mécanisme de changement de vitesse à l'extérieur de la boîte de vitesses,
- mobile en translation, un coulissement de l'arbre de changement de vitesse permettant de choisir des voies de changement de vitesse individuelles, et
- mobile en rotation, une rotation de l'arbre de changement de vitesse permettant de commuter des rapports de vitesse individuels d'une voie de changement de vitesse choisie momentanément.

5. Véhicule conforme à la revendication 4,
**caractérisé en ce que**
le premier câble (8) est couplé au mécanisme de changement de vitesse de sorte qu'un actionnement de ce premier câble (8) permette de faire tourner l'arbre de changement de vitesse.

6. Véhicule conforme à la revendication 4 ou 5,
**caractérisé en ce que**
le second câble (8) est couplé au mécanisme de changement de vitesse de sorte qu'un actionnement de ce second câble permette de faire coulisser l'arbre de commutation.

7. Véhicule conforme à l'une des revendications 4 à 6,
**caractérisé en ce que**
le moteur à combustion interne est monté dans le véhicule de sorte que le vilebrequin de ce moteur à combustion interne s'étende dans la direction transversale (5) du véhicule.

8. Véhicule conforme à l'une des revendications 1 à 7,
**caractérisé en ce que**
les deux câbles (8, 10) sont guidés parallèlement l'un par rapport à l'autre sur l'embrase du levier de changement de vitesse (2).
